# EUROPEAN PATENT APPLICATION

(11) **EP 1 496 277 A2**
(43) Date of publication of application: **12.01.2005**
(21) Application number: 04254148.2
(22) Date of filing: 12.07.2004
(51) Int. Cl.: F16C 23/04, F16C 33/20, F16C 33/12

(54) **Spherical bearing**

(30) Priority: 11.07.2003 JP 2003196151
(71) Applicant: Minebea Co., Ltd., Nagano-ken 389-0293 (JP)
(72) Inventor: Sato, Kiyoshi, Nagano-ken 389-0293 (JP); Sasaki, Gen, Nagano-ken 389-0293 (JP); Tsuda, Takaaki, Nagano-ken 389-0293 (JP)
(74) Representative: Wilson Gunn Gee

(57) **Abstract**

The present invention provides a spherical bearing with good endurance and high resistance to scratching on the convex spherical body of the inner retaining piece even when in long-term sliding contact with a polytetrafluoroethylene-based liner. A spherical bearing comprising an outer retaining piece (1) forming a sliding surface in the form of a concave spherical surface having a polytetrafluoroethylene-based liner (2) on the race inner peripheral surface is disclosed. An inner retaining piece (3) of the spherical bearing is held by the outer retaining piece and has an outer peripheral surface in the form of a convex spherical surface that is in sliding contact with the sliding surface of the outer retaining piece. The convex spherical surface of the inner retaining piece has a uniform thin-film layer (4) of a TiAlN compound.

## Description

### BACKGROUND OF THE INVENTION

### Field Of The Invention

The present invention relates to a spherical bearing, in particular, to a spherical bearing suitable for variable supports for aircraft flaps and suspension mechanisms of automobiles.

### Description Of Related Art

Japanese Unexamined Patent Application No. H05-149324 discloses a conventional spherical bearing, as shown in FIG. 1, that includes an outer retaining piece 1. The inner peripheral surface of the retaining piece 1 has a concave spherical surface that forms a sliding surface. The sliding surface has a polytetrafluoroethylene-based liner 2 pasted on it with a thermosetting resin. An inner retaining piece 3 is held by the outer retaining piece 1. The inner retaining piece 3 has a convex spherical outer peripheral surface that is in contact with the polytetrafluoroethylene-based liner 2 held on the concave spherical surface of the outer retaining piece 1. The inner retaining piece 3 of a conventional spherical bearing of above construction can rotate through an angle within a fixed range with respect to the outer retaining piece 1.

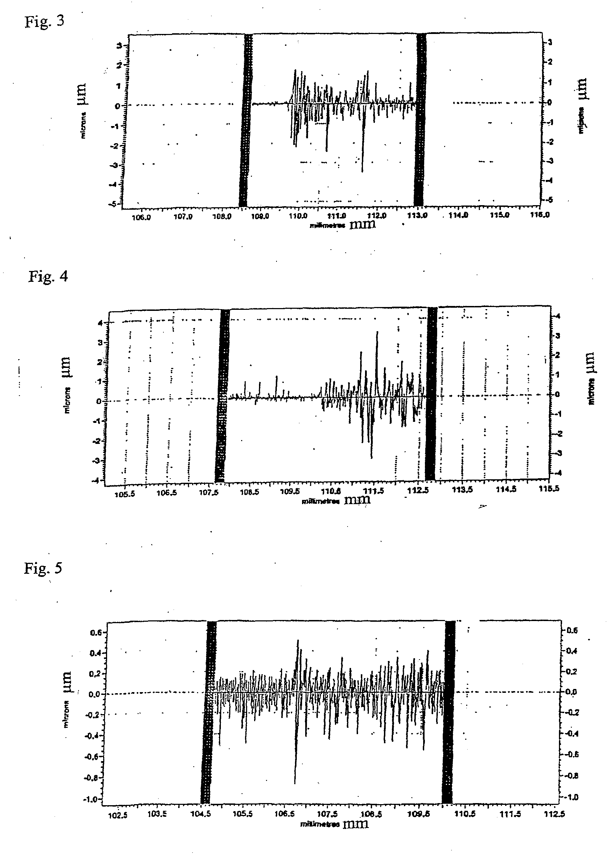

However, because the convex spherical surface of the inner retaining piece 3 is brought into contact with the polytetrafluoroethylene-based liner 2, when used for a long time, scratches appear on the entire surface of the convex spherical surface, as shown in FIG. 3. (FIG. 3 is a plot obtained by manipulating a measuring needle of a surface roughness meter in the direction perpendicular to the scratches on the spherical surface of a convex spherical body made from stainless steel that has been used for 100,000 cycles.)

Causes for such scratches include the correlation, i.e., the close fit, between the convex spherical body of the inner retaining piece 3 and the polytetrafluoroethylene-based liner 2, and are of a very complex nature that is not fully understood.

If the scale of scratches exceeds a certain level, the polytetrafluoroethylene-based liner 2 is rapidly fractured, causing excess looseness and making it impossible for the spherical bearing to function.

Another problem is, for example, when a surface hardened layer is formed by diffusion of hardening elements (C, N, B, and the like) as a means for improving the wear resistance characteristic, the thickness thereof cannot be increased, and when a hard film is coated, the adhesion thereof is insufficient. Japanese Unexamined Patent Application No. H05-279839 discloses a sliding part having an intermetallic compound formed on the surface, this compound being other than a coating. Japanese Unexamined Patent Application No. H05-279839 suggests a Ti alloy sliding part in which a surface layer is composed of 15-75 % Al with Ti as the balance. The surface layer is formed on the surface of the base material that is Ti alloy. Here, it was found that the intermetallic compound (Ti₃Al, TiAl, TiAl₃, depending on the composition) of Ti and Al, which has a regular lattice structure, makes it possible to realize a good sliding characteristic with little wear and a high resistance to seizure. Moreover, an intermetallic compound is formed on the surface of a Ti or Al alloy base material even when a high impact resistance is required. Although the intermetallic compound is brittle in comparison to the alloy, good adhesion can be obtained because the intermetallic compound constituting the surface layer and the base material are based on the same metals.

However, spherical bearings that combine improved hardness with increased adhesion are not disclosed by any of these references.

### SUMMARY OF THE INVENTION

The present invention provides a spherical bearing in which formation of scratches on the convex spherical surface of the inner retaining piece 3 is prevented even in long-term use. The present invention also provides a lightweight spherical bearing suitable for use in airplanes that demonstrates stable torque and excellent mechanical characteristics within a range from a low temperature to a high temperature.

The present invention discloses a spherical bearing having an outer retaining piece forming a sliding surface in the form of a concave spherical surface having a polytetrafluoroethylene-based liner on the race inner peripheral surface. An inner retaining piece is held by the outer retaining piece and has an outer peripheral surface in the form of a convex spherical surface that is in sliding contact with the sliding surface of the outer retaining piece. The sliding surface, in the form of a convex spherical surface of the inner retaining piece, has a uniform thin-film layer of a TiAlN compound.

Further features and advantages will appear more clearly on a reading of the detailed description, which is given below by way of example only and with reference to the accompanying drawings wherein corresponding reference characters on different drawings indicate corresponding parts.

### BRIEF DESCRIPTION OF THE DRAWINGS

FIG. 1 is a sketch of the conventional spherical bearing.

FIG. 2 is a sketch of the spherical bearing in accordance with the present invention.

FIG. 3 shows the results of the surface roughness test of the spherical bearing of the prior art example after use for 100,000 cycles.

FIG. 4 shows the results of the surface roughness test of the spherical bearing of the comparative example after use for 100,000 cycles.

FIG. 5 shows the results of the surface roughness test of the spherical bearing of Embodiment 1 after use for 100,000 cycles.

FIG. 6 shows the results relating to wear characteristics of the spherical bearing of the prior art example, the spherical bearing of the comparative example, and the spherical bearing of Embodiment 1.

### DETAILED DESCRIPTION OF THE INVENTION

The inventors have conducted a comprehensive research of materials that in the form of a thin-film layer 4 provided on the convex spherical body of the inner retaining piece 3 have good compatibility with the polytetrafluoroethylene-based liner 2. The results of the study clearly demonstrated that when the sliding surface in the form of a convex spherical surface has a uniform thin-film layer 4 of a TiAlN (Nitride-Titanium-Aluminum) compound, the compatibility with the polytetrafluoroethylene-based liner 2 is good and a stable sliding surface is realized over a long period. Disclosed herein is a spherical bearing having an outer retaining piece 1 forming a sliding surface in the form of a concave spherical surface having a polytetrafluoroethylene-based liner 2 on the race inner peripheral surface. The inner retaining piece 3 is held by the outer retaining piece 1 and has an outer peripheral surface in the form of a convex spherical surface that is in sliding contact with the sliding surface of the outer retaining piece 1. The sliding surface, in the form of a convex spherical surface of the inner retaining piece 3, hathea uniform thin-film layer 4 of a TiAlN compound.

The thin film layer 4 of a TiAlN compound can be obtained by a PVD method (arc ion plating (AlP) or sputtering), and the thickness of the thin film layer 4 is about 0.5 µm to 5 µm, preferably 2.0 µm to 4.0 µm.

The material of the outer retaining piece 1 or inner retaining piece 3 can be any one of stainless steel, titanium, or a titanium alloy. Titanium or a titanium alloy can be used for the purpose of reducing the weight. When the inner retaining piece 3 is subjected to pressure and the hardness of the titanium material has to be improved, it is possible to use an inner retaining piece 3 with a titanium surface subjected to carbonitriding treatment. Propane, butane, ethylene, or acetylene can be used as a carburizing gas. Gas obtained by decomposing ammonia and nitrogen can be used as nitriding gases. The treatment temperature is preferably 750-900°C.

Furthermore, in accordance with the present invention, the polytetrafluoroethylene-based liner 2 can be reinforced, for example, with at least one back-up material selected from the group including glass fibers, Dacron, Nomex, and bronze composite. The spherical bearing with reduced weight can be used as a variable support member for airplane flaps. The spherical bearing in accordance with the present invention can also be used as a variable support member for suspension mechanisms of automobiles. Embodiments of the present invention will be described hereinbelow in greater detail.

### Embodiment 1- using an inner retaining piece made from stainless steel

FIG. 2 shows a thin-film TiAlN layer 4 with a thickness of 3.0 µm that was provided by AIP (arc ion plating method) on the convex spherical sliding surface of the inner retaining piece 3 made from stainless steel. A polytetrafluoroethylene-based liner 2 with a thickness of 0.30 mm was pasted by using a phenolic resin (resol-type) onto the concave spherical surface of an outer retaining piece 1. A spherical bearing was produced by assembling the outer retaining piece 1 provided with the polytetrafluoroethylene-based liner 2 and the inner retaining piece 3 provided with the TiAlN thin-film layer 4 on the convex spherical sliding surface.

### Embodiment 2 - using an inner retaining piece made from titanium

FIG. 2 shows a thin-film TiAlN layer 4 with a thickness of 3.0 µm that was provided by AIP (arc ion plating method) on the convex spherical sliding surface of an inner retaining piece 3 made from titanium. A polytetrafluoroethylene-based liner 2 with a thickness of 0.30 mm was pasted by using a phenolic resin (resol-type) onto the concave spherical surface of an outer retaining piece 1. A spherical bearing was produced by assembling the outer retaining piece 1 provided with the polytetrafluoroethylene-based liner 2 and the inner retaining piece 3 provided with the TiAlN thin-film layer 4 on the convex spherical sliding surface.

### Embodiment 3 - using an inner retaining piece made from titanium in which the titanium surface was subjected to carbonitriding treatment

An inner retaining piece 3 made from titanium was placed into a carburizing apparatus consisting of a furnace (chamber) having a carburizing gas at a temperature of about 850° and pressure of 0.1-1 atm. A uniform carburized film with a depth of about 50 µm was formed on the convex spherical sliding surface. Ammonia gas was then introduced in the chamber and nitriding of the convex surface was conducted using the gas obtained by decomposition of ammonia.

As shown in FIG. 2, a thin-film TiAlN layer 4 with a thickness of 3.0 µm was provided by AlP (arc ion plating method) on the convex spherical sliding surface of the inner retaining piece 3 made from titanium having a uniform carbonitrided film formed thereon. A polytetrafluoroethylene-based liner 2 with a thickness of 0.30 mm was pasted by using a phenolic resin (resol-type) onto the concave spherical surface of an outer retaining piece 1. A spherical bearing was produced by assembling the outer retaining piece 1 provided with the polytetrafluoroethylene-based liner 2 and the inner retaining piece 3 provided with the TiAlN thin-film layer 4 on the convex spherical sliding surface.

### Prior Art Example

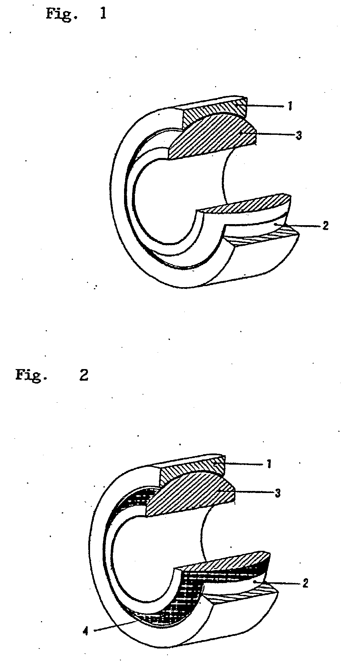

As shown in FIG. 1, a polytetrafluoroethylene-based liner 2 with a thickness of 0.30 mm was pasted using a phenolic resin (resol-type) onto the concave spherical surface of an outer retaining piece 1. A spherical bearing was then produced by assembling the outer retaining piece 1 provided with the polytetrafluoroethylene-based liner 2 and an inner retaining piece 3 made from stainless steel.

### Comparative Example

As shown in FIG. 2, a thin-film TiN layer 4 with a thickness of 3.0 µm was provided by AIP (arc ion plating method) on the convex spherical sliding surface of an inner retaining piece 3 made from stainless steel. A polytetrafluoroethylene-based liner 2 with a thickness of 0.30 mm was pasted by using a phenolic resin (resol-type) onto the concave spherical surface of an outer retaining piece 1. A spherical bearing was produced by assembling the outer retaining piece 1 provided with the polytetrafluoroethylene-based liner 2 and the inner retaining piece 3 provided with the TiAlN thin-film layer on the convex spherical sliding surface.

### Performance Test

The spherical bearing of Embodiment 1, the spherical bearing of the prior art example, and the spherical bearing of the comparative example were each used for 100,000 cycles, and each convex spherical body of the inner retaining piece 3 was traced with a measuring needle of a surface roughness meter in the direction perpendicular to the scratches on the spherical surface.

The measurements were conducted under the following conditions: 20-50 MPa, 10-50 cpm, rotation angle (swinging angle) 10-90 degrees.

The surface roughness results obtained from the convex spherical body of the inner retaining piece 3 of the spherical bearing of the prior art example are shown in FIG. 3. The average roughness at the convex spherical body of the prior art example was 0.2988 µmRa, and the peak waveform below zero was 3.4 µmRa (scratch depth).

The surface roughness results obtained from the convex spherical body of the inner retaining piece 3 of the spherical bearing of the comparative example are shown in FIG. 4. The average roughness at the convex spherical body of the comparative example was 0.2935 µmRa, and the peak waveform below the zero was 3.1 µmRa (scratch depth). In addition, marked scratches appeared on about half of the semispherical surface. This result confirms instability of the TiN thin-film layer.

The surface roughness results obtained from the convex spherical body of the inner retaining piece 3 of the spherical bearing of Embodiment 1 are shown in FIG. 5 (enlarged view).

The average roughness at the convex spherical body of Embodiment 1 was 0.0995 µmRa, and the peak waveform below the zero was 0.9 µmRa (scratch depth). Moreover, the surface layer was confirmed to be stable over the entire surface.

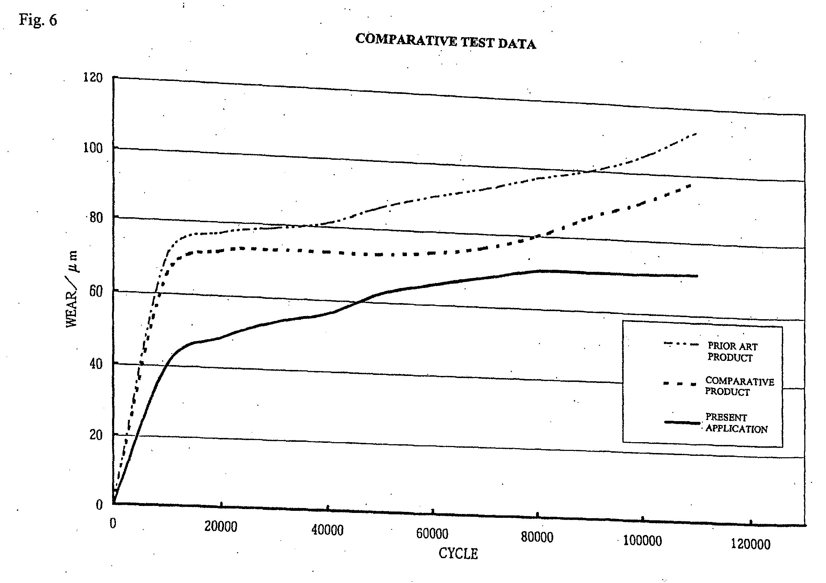

The results relating to wear characteristic of the spherical bearing of Embodiment 1, the spherical bearing of the prior art example, and the spherical bearing of the comparative example are shown in FIG. 6.

The above results indicate that the spherical bearing in accordance with the present invention demonstrates small wear, stable characteristics and good endurance, even when in long-term sliding contact with the polytetrafluoroethylene-based liner 2. The spherical bearing in accordance with the present invention, in which the convex spherical sliding surface of the inner retaining piece 3 has the uniform thin-film layer 4 of a TiAlN compound, shows good compatibility with a polytetrafluoroethylene-based liner 2, small wear and stability of the thin-film layer 4 and the polytetrafluoroethylene-based liner 2 even in long-term use. Therefore, a spherical bearing with good endurance is obtained.

While preferred embodiments of the invention have been described, various modifications will be apparent to one skilled in the art in light of this disclosure and are intended to fall within the scope of the appended claims.

## Claims

1. A spherical bearing comprising:
an outer retaining piece;
a concave spherical surface formed on the outer retaining piece;
a polytetrafluoroethylene-based liner attached on the concave spherical surface;
an inner retaining piece that is held by the outer retaining piece;
a convex spherical surface formed on the inner retaining piece;
a uniform thin-film layer of a TiAlN compound formed on the convex spherical surface, wherein
the convex spherical surface is in sliding contact with the concave spherical surface.

2. The spherical bearing of Claim 1, wherein the material of the outer retaining piece is selected from a group consisting of stainless steel, titanium, and titanium alloy.

3. The spherical bearing of Claim 1 or 2, wherein the material of the inner retaining piece is selected from a group consisting of stainless steel, titanium, and titanium alloy.

4. The spherical bearing of Claim 1 or 2, wherein the material of the inner retaining piece is titanium.

5. The spherical bearing of any preceding Claim, wherein the surface of the inner retaining piece is subjected to carbonitriding treatment.

6. The spherical bearing of any preceding Claim, wherein the polytetrafluoroethylene-based liner is reinforced with at least one back-up material selected from a group consisting of glass fibers, Dacron, Nomex, and bronze composite.
